(19) Europäisches Patentamt
European Patent Office
Office européen des brevets

(11) Veröffentlichungsnummer : **0 067 274**
**B1**

(12) # EUROPÄISCHE PATENTSCHRIFT

(45) Veröffentlichungstag der Patentschrift : **17.10.84**

(51) Int. Cl.³ : **H 01 M 10/39**, H 01 M 6/18, C 01 B 33/32

(21) Anmeldenummer : **82101987.4**

(22) Anmeldetag : **12.03.82**

(54) **Ionenleitender Mischkristall.**

(30) Priorität : **11.06.81 DE 3123099**

(43) Veröffentlichungstag der Anmeldung : **22.12.82 Patentblatt 82/51**

(45) Bekanntmachung des Hinweises auf die Patenterteilung : **17.10.84 Patentblatt 84/42**

(84) Benannte Vertragsstaaten : **AT FR GB NL SE**

(56) Entgegenhaltungen :
**EP-A- 0 046 932**
**DE-A- 2 754 454**
**US-A- 4 166 159**

(73) Patentinhaber : **VARTA Batterie Aktiengesellschaft**
**Am Leineufer 51**
**D-3000 Hannover 21 (DE)**

(72) Erfinder : **von Alpen, Ullrich, Dr.**
**Im Kastanienhain 5**
**D-6246 Schlossborn (DE)**
Erfinder : **Bräutigam, Reinhard**
**Alt Langenhain 9**
**D-6238 Hofheim (DE)**
Erfinder : **Ollapuram, Antony, Dr.**
**Rebstöckerweg 3**
**D-6000 Frankfurt/M. (DE)**

(74) Vertreter : **Kaiser, Dieter Ralf, Dipl.-Ing.**
**Gundelhardtstrasse 72**
**D-6233 Kelkheim/Ts. (DE)**

**EP 0 067 274 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Mischkristall zur Verwendung als ionenleitender Festelektrolyt in galvanischen Elementen, der aus dem Komponenten $Na_2O$, $ZrO_2$, $P_2O_5$ und $SiO_2$ gebildet ist.

Gemäß früherer Patentanmeldung EP-A2-0 046 932 wurden die Verbindungen $Na_4Zr_{1,5}Si_3O_{11}$, $Na_4ZrSi_3O_{10}$ und $Na_4Zr_{0,5}Si_3O_9$ hergestellt, bei denen Phosphor nicht vorhanden ist. In einem Vierstoffsystem mit den Endgliedern $ZrO_2$, $P_2O_5$, $SiO_2$ und $Na_2O$ stellen die genannten Verbindungen daher Randphasen dar und liegen bei räumlicher Darstellung des Vierstoffsystems in der von den Endgliedern $ZrO_2$, $SiO_2$ und $Na_2O$ aufgespannten Tetraederfläche, genauer: Auf dem quasibinären Schnitt durch diese Fläche zwischen $ZrO_2$ und der formalen Verbindung $Na_4Si_3O_8$.

Mit x = 0 in der obigen Formel ergibt sich der Si-freie Mischkristall $NaZr_2P_3O_{12}$, ebenfalls eine Randphase und in dem obengenannten Vierstoffdiagramm in der von den Endgliedern $ZrO_2$, $P_2O_5$ und $Na_2O$ aufgespannten Tetraederfläche gelegen.

Die bekannten Mischkristalle, die durch die eingangs angegebene allgemeine Formel beschrieben werden können, haben ihren Existenzbereich in dem durch die drei Endglieder $NaZr_2P_3O_{12}$, $Na_4Zr_{1,5}Si_3O_{11}$ und $Na_4Zr_{0,5}Si_3O_9$ definierten Feld.

Es hatte sich nun gezeigt, daß die hier existierenden Mischkristalle ähnlich wie in dem benachbarten und schon länger bekannten NASICON-System, $NaZr_2P_3O_{12}$ ... $Na_4Zr_2Si_3O_{12}$, als rhomboedrische Verbindungen mit guter Ionenleitfähigkeit erhältlich sind, wenn x in der allgemeinen Formel den Wert 1,6 nicht übersteigt. Diese Kristalle zeichnen sich außerdem durch Phasenreinheit aus, während die NASICON-Mischkristalle nicht als phasenrein bekannt sind. Bei höheren Werten als 1,6 jedoch wurden in dem Mischkristallfeld einschließlich der Randphasen $Na_4Zr_{0,5}Si_3O_9$, $Na_4ZrSi_3O_{10}$ und $Na_4Zr_{1,5}Si_3O_{11}$ monokline Mischkristalle gefunden, die sich ebenfalls phasenrein darstellen lassen und dabei einen hohen Kristallisationsgrad aufweisen. Gegenüber der rhomboedrischen Phase sind sie vor allem durch eine beträchtlich erhöhte Leitfähigkeit ausgezeichnet, die bei 300 °C etwa $1,6 \times 10^{-3}\ \Omega^{-1} \times cm^{-1}$ beträgt.

Da die Stabilität der einphasig-monoklinen Mischkristalle gegenüber Natrium nicht ganz befriedigt, liegt vorliegender Erfindung die Aufgabe zugrunde, im Umfeld des Existenzgebietes der bekannten Mischkristalle weitere Mischkristalle zu erschließen, die sich bei einer Temperatur von 300 °C sowohl chemisch als auch elektrochemisch gegen Natrium langfristig stabil verhalten, bei der gleichen Temperatur hohe Ionenleitfähigkeit besitzen und sich als Sinterkörper von hoher Dichte und Phasenreinheit darstellen lassen.

Die Aufgabe wird erfindungsgemäß dadurch gelöst, daß ihre Zusammensetzung gegeben ist durch die allgemeine Formel

$$Na_{1+ax}Zr_{2+2/3x-ax}Si_xP_{3-x}O_{12-2/3x},$$

wobei a eine Konstante mit einem Zahlenwert zwischen 0,8 und 0,9, x ein Laufparameter mit Zahlenwerten von 1,8 bis 2,3 ist.

Die erfindungsgemäße Mischkristallreihe ist durch eine Zusammensetzung charakterisiert, bei der je nach Größe des Laufparameters x eine Verringerung des Na-Gehalts um 10 bis 20 Mol% durch eine komplementäre Zusatzmenge an Zr stöchiometrisch ausgeglichen ist. Die auf Na und Zr entfallende Sauerstoffmenge wird auf diese Weise zwischen beiden Metallen nach Maßgabe von a nur umverteilt, im ganzen unterliegt der 0-Gehalt der Verbindung jedoch keiner nennenswerten Änderung.

Die erfindungsgemäße Mischkristallzusammensetzung weist also den kleineren Na-Anteil 1 + ax und den größeren Zr-Anteil 2 – (1/3x – (1 – a)x) auf. Durch Umformen erhält man

$$\begin{aligned} &2 - (1/3x - (1 - a)x) \\ &= 2 - (1/3 - 1 + a)x \\ &= 2 + 2/3x - ax \end{aligned}$$

und damit die vorstehende Mischkristallformel.

Durch die Verringerung des Na-Gehalts liegt beim erfindungsgemäßen Mischkristall erhöhte Na-Ionenleitung vor. Allerdings sind der Na-Unterstöchiometrie bei einem Na-Defizit von 15-20 Mol% Grenzen gesetzt, wenn das Material noch monophasig vorliegen soll. Die zulässige Gehaltserniedrigung für Na drückt sich daher durch Zahlenwerte zwischen 0,8 und 0,9 für a aus.

Zirkon und Natrium werden in dem Gitter erfindungsgemäßer Mischkristalle in Form von $NaO_6$- bzw. $ZrO_6$-Oktaedern eingebaut. Dies bedeutet kristallchemisch, daß anstelle von $NaO_6$-Oktaedern $ZrO_6$-Oktaeder im Gitter getreten sind, die die Stabilität erhöhen und daß sich der Sauerstoffgehalt nicht ändert. Dieser Umstand macht es auch möglich, den Austausch von Na gegen Zr in der Mischkristallformel durch die Einführung einer einzigen Konstante, nämlich a, darzustellen.

Der $ZrO_2$-Gehalt der vorliegenden Verbindung spielt eine entscheidende Rolle für die Stabilität gegenüber Natrium.

So war in früheren, von NASICON, $Na_{1+x}Zr_2Si_xP_{3-x}O_{12}$, ausgehenden Versuchen der $ZrO_2$-Gehalt um 1/3 x verringert worden, um eine $ZrO_2$-Segregation zu verhindern; gleichzeitig wurde ein Parameter y eingeführt, der eine gewisse Erhöhung des $ZrO_2$-Gehalts in einer geringen Variationsbreite zur Stabilitätserhöhung zuläßt. Gegenüber der diesen Maßnahmen Rechnung tragenden Formel

$Na_{1+x}Zr_{2-1/3x+y}Si_xP_{3-x}O_{12-2/3x+2y}$

mit den Parametern $0{,}01 \leq x \leq 3$ ; $0 \leq y \leq 0{,}5$ ergibt sich bei der erfindungsgemäßen Mischkristallformel eine Stöchiometrieerniedrigung des Na aus der Einführung des Faktors $0{,}8 \leqslant a \leqslant 0{,}9$, wobei eine $O_2$-Unterstöchiometrie dadurch aufgehoben wird, daß der Faktor y bei $O_2$ in jedem Fall Null ist, beim Zr aber größer als Null ist.

Eine bevorzugte Verbindung der erfindungsgemäßen Mischkristallreihe hat die Zusammensetzung $Na_{2,94}Zr_{1,54}Si_{2,2}P_{0,8}O_{10,53}$. Diese ist in der allgemeinen Formel durch die Parameterwerte a = 0,88 und x = 2,2 definiert.

Diese Zusammensetzung ist deswegen bevorzugt für die Anwendung als Separator in elektrochemischen Zellen vorgesehen, weil bei der Herstellung kein freies $ZrO_2$ beobachtet wird. Dies bedeutet, daß $ZrO_2$ vollständig in das Gitter eingebaut wird und auch den Kristalloberflächen nicht auskristallisiert.

Von erfindungswesentlicher Bedeutung für die Qualität des Mischkristalls ist auch die besondere Verfahrensweise beim Sintern. Es wurde gefunden, daß die Gegenwart einer reinen Sauerstoffatmosphäre gleichermaßen zur Erhöhung der Dichte und der Ionenleitfähigkeit beiträgt. Erfindungsgemäß werden die Komponenten des Mischkristalls in den jeweils für eine bestimmte gewünschte Zusammensetzung erforderlichen molaren Anteilen in feinpulveriger Form gemischt und bei einer möglichst hohen, etwa bei 1 200 °C liegenden Temperatur, jedoch unter Vermeidung des Auftretens einer flüssigen Phase, in reinem Sauerstoffstrom oder in einem mit Sauerstoff gefüllten Ofenraum so lange gesintert, bis im Röntgendiagramm kein $ZrO_2$-Peak mehr erkennbar ist.

Der Erfolg dieser Sinterbehandlung bei Mischkristallen der bevorzugten Zusammensetzung wird anhand von Diagrammen erläutert. Im einzelnen zeigt

Figur 1 die willkürlich normierte Intensität I des stärksten $ZrO_2$-Röntgenreflexes bei $2\,\theta = 28{,}24°$ in Abhängigkeit von der Stöchiometrie x,

Figur 2 die Dichte d des erfindungsgemäß gesinterten Mischkristalls in Abhängigkeit von der Stöchiometrie x,

Figur 3 die elektrische Raumtemperatur-Leitfähigkeit $\sigma_{300°K}$ des erfindungsgemäß gesinterten Mischkristalls in Abhängigkeit von der Stöchiometrie x, und

Figur 4 die elektrische Hochtemperatur-Leitfähigkeit $\sigma_{575°K}$ des erfindungsgemäß gesinterten Mischkristalls in Abhängigkeit von der Stöchiometrie x.

Aus Figur 1 wird deutlich, daß bei der Zusammensetzung x = 2,2 freies $ZrO_2$ im Mischkristall völlig verschwindet. Dabei wurden nur die Oberflächen der Sinterkörper analysiert, das Innere ist ohnehin $ZrO_2$-frei. Die Vergleichbarkeit der Sinterproben zeigt sich in den vergleichbaren Höhen des stärksten Röntgenreflexes der Mischkristallreihe bei $2\,\theta = 30{,}5°$ (hier nicht dargestellt).

Die Dichte der erfindungsgemäßen Mischkristallreihe erfährt nach Ausweis von Figur 2 aufgrund der Sauerstoffsinterung (gestrichelte Kurve) eine deutliche Erhöhung gegenüber der Luftsinterung (punktierte Kurve).

Nach Figur 3 bewirkt die Erhöhung des Stöchiometrie x von 1,9 auf 2,2 eine außerordentliche Steigerung der Ionenleitfähigkeit $\sigma_{300°K}$ (Raumtemperatur) bis auf etwa $11 \cdot 10^{-4} \cdot \Omega^{-1}cm^{-1}$, zu der ebenso die Sauerstoffsinterung (gestrichelte Kurve), wenn auch hier nur in untergeordnetem Maße, beiträgt. Eine Ausnutzung der noch besseren Leitfähigkeit am Rande des Existenzgebietes bei x = 2,3 ist kritisch, weil bei dieser Zusammensetzung die Gefahr sehr groß wird, daß bei gerinster Stöchiometrieänderung die Phase rhomboedrisch und somit schlecht Na-ionenleitend wird.

Die Hochtemperatur-Leifähigkeiten $\sigma_{575°K}$ (ca. 300 °C) in Abhängigkeit von der Stöchiometrie x gemäß Figur 4 (erfindungsgemäße Sauerstoffsinterung gestrichelt, Luftsinterung punktiert) sind im Hinblick auf die Verwendung der Mischkristalle als Festelektrolyte in Na/S-Zellen interessant. Dabei zeigt sich eine der Zellenfunktion gut angepaßte Leitfähigkeit von durchschnittlich $0{,}2\ \Omega^{-1}cm^{-1}$.

In Ergänzung zu den Figuren gibt die nachstehende Tabelle 1 einen Vergleich zwischen dem erfindungsgemäßen Mischkristall und bekannten Mischkristallen gemäß der Formel $Na_{1+x}Zr_{2-1/3x}Si_xP_{3-x}O_{12-2/3x}$ hinsichtlich Ionenleitfähigkeit $\sigma$, Aktivierungsenergie $E_a$ und Dichte D. Die Zahlenbeispiele liefern für die Vorzugsstellung des erfindungsgemäßen Mischkristalls einen deutlichen Beweis.

Bekannter Mischkristall

| | σ RT ($\Omega^{-1}$ $cm^{-1}$) | σ 300 °C ($\Omega^{-1}$ $cm^{-1}$) | Ea (kJ/Mol) | D g/cm³) |
|---|---|---|---|---|
| x = 2,2 | $4.4 \cdot 10^{-5}$ | $6 \cdot 10^{-2}$ | 41 | 2 · 97 |
| x = 2,0 | $1.9 \cdot 10^{-4}$ | 0 · 15 | 38 | 2 · 85 |

Neuer Mischkristall

| | σ RT ($\Omega^{-1}$ $cm^{-1}$) | σ 300 °C ($\Omega^{-1}$ $cm^{-1}$) | Ea (kJ/Mol) | D g/cm³) |
|---|---|---|---|---|
| x = 2,2 | $1 \cdot 10^{-3}$ | 0 · 23 | 32 | 3 · 02 |
| x = 2,0 | $3.4 \cdot 10^{-4}$ | 0 · 15 | 35 | 3 · 04 |

**Ansprüche**

1. Mischkristall zur Verwendung als ionenleitender Festelektrolyt in galvanischen Elementen, der aus den Komponenten $Na_2O$, $ZrO_2$, $P_2O_5$ und $SiO_2$ gebildet ist, dadurch gekennzeichnet, daß seine Zusammensetzung gegeben ist durch die allgemeine Formel

$$Na_{1+ax}Zr_{2+2/3x-ax}Si_xP_{3-x}O_{12-2/3x},$$

wobei a eine Konstante mit einem Zahlenwert zwischen 0,8 und 0,9, x ein Laufparameter mit Zahlenwerten von 1,8 bis 2,3 ist.

2. Mischkristall nach Anspruch 1, dadurch gekennzeichnet, daß x den Zahlenwert 2,2 und a den Zahlenwert 0,88 hat.

3. Verfahren zur Herstellung von Mischkristallen nach den Ansprüchen 1 und 2, dadurch gekennzeichnet, daß die Komponenten des Mischkristalls in den jeweils für eine bestimmte gewünschte Zusammensetzung erforderlichen molaren Anteilen in feinpulveriger Form gemischt und bei einer möglichst hohen, etwa bei 1 200 °C liegenden Temperatur, jedoch unter Vermeidung des Auftretens einer flüssigen Phase, in reinem Sauerstoffstrom oder in einem mit Sauerstoff gefüllten Ofenraum so lange gesintert werden, bis im Röntgendiagramm kein $ZrO_2$Peak mehr erkennbar ist.

**Claims**

1. A mixed crystal for use as an ion-conducting solid electrolyte in galvanic cells, which is formed from the components $Na_2O$, $ZrO_2$, $P_2O_5$ and $SiO_2$, characterized in that its composition is indicated by the general formula

$$Na_{1+ax}Zr_{2+2/3x-ax}Si_xP_{3-x}O_{12-2/3x},$$

in which a is a constant with a numerical value between 0.8 and 0.9, and x is a variable parameter with numerical values of from 1.8 to 2.3.

2. A mixed crystal according to Claim 1, characterized in that x has the numerical value 2.2 and a the numerical value 0.88.

3. A process for preparing mixed crystals according to Claims 1 and 2, characterized in that the components of the mixed crystal are mixed in a finely powdered form in the molar proportions required in each case for a specific desired composition and, at a temperature as high as possible, at approximately 1 200 °C, but while avoiding the occurence of a liquid phase, are sintered in a stream of pure oxygen or in a furnace chamber filled with oxygen until a $ZrO_2$ peak is no longer evident in an X-ray diagram.

**Revendications**

1. Cristal mixte, destiné à être utilisé comme électrolyte solide conducteur d'ions dans des éléments galvaniques, qui est formé des composants $Na_2O$, $ZrO_2$, $P_2O_5$ et $SiO_2$, caractérisé en ce que sa composition est donnée par la formule générale

$$Na_{1+ax}Zr_{2+2/3x-ax}Si_xP_{3-x}O_{12-2/3x},$$

où a une constante avec un indice numérique entre 0,8 et 0,9, et x un paramètre variable avec des indices numériques de 1,8 à 2,3.

2. Cristal mixte suivant la revendication 1, caractérisé en ce que x a la valeur numérique 2,2, et a, la valeur numérique 0,88.

3. Procédé pour la préparation de cristaux mixtes suivant l'une des revendications 1 et 2, caractérisé en ce que l'on mélange les composants du cristal mixte, sous forme de poudres fines, dans les proportions molaires nécessaires pour une composition déterminée voulue, et les fritte à une température la plus haute possible, sensiblement vers 1 200 °C, toutefois en évitant l'apparition d'une phase liquide, dans un courant d'oxygène pur ou dans une chambre de four remplie d'oxygène, pendant une durée suffisante pour qu'on ne puisse plus constater la présence, dans le spectre de rayons X, d'un pic $ZrO_2$.

Fig.1

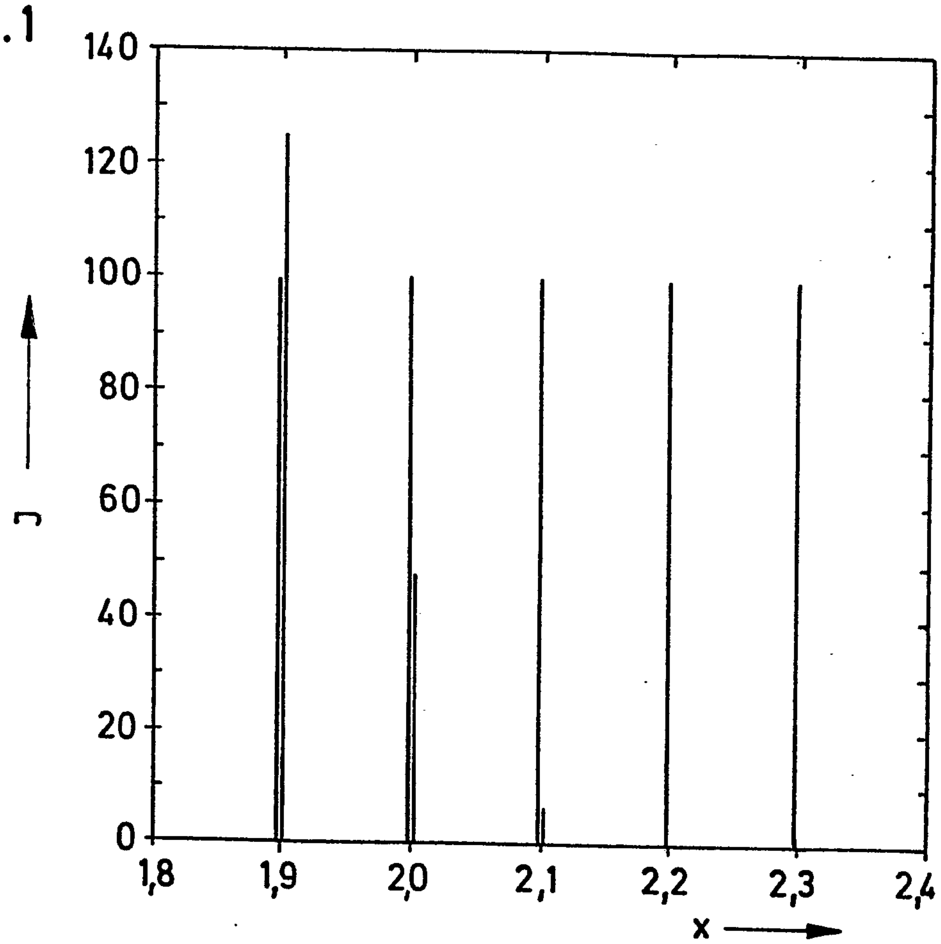
140
120
100
80
60
40
20
0
J
1,8
1,9
2,0
2,1
2,2
2,3
2,4
x

Fig.2

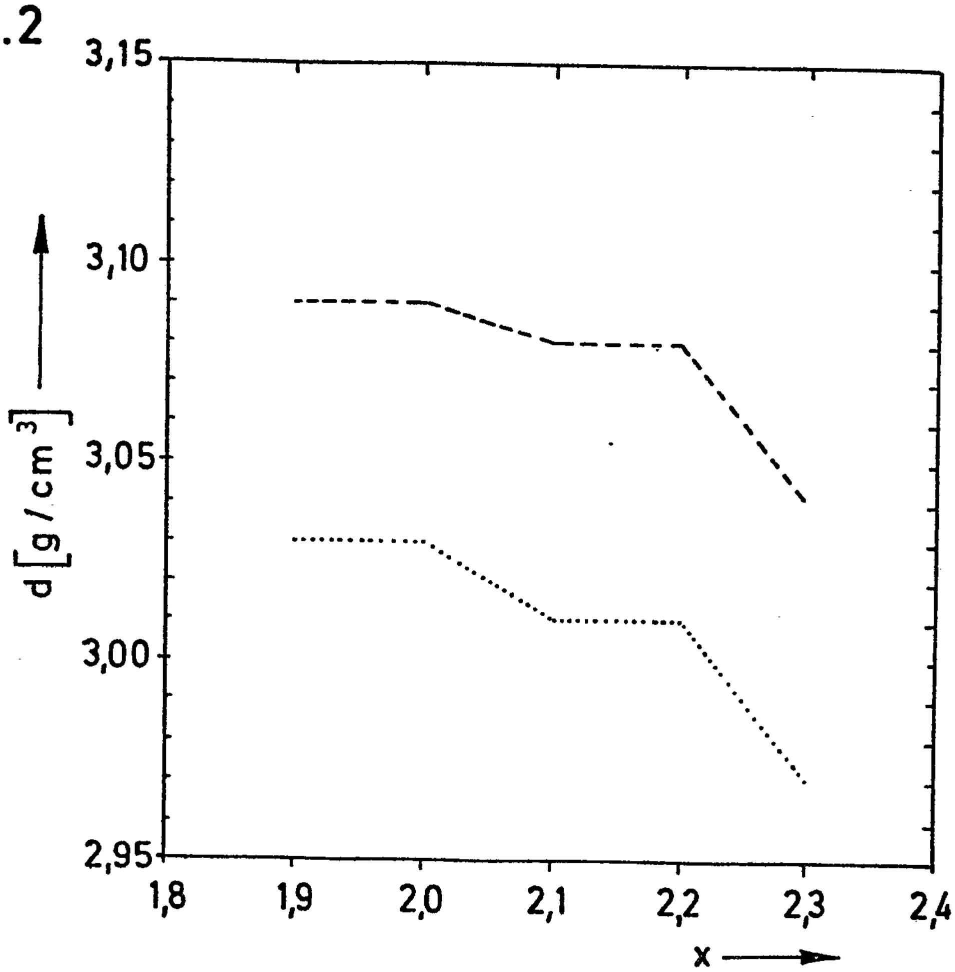
3,15
3,10
3,05
3,00
2,95
d [g/cm³]
1,8
1,9
2,0
2,1
2,2
2,3
2,4
x

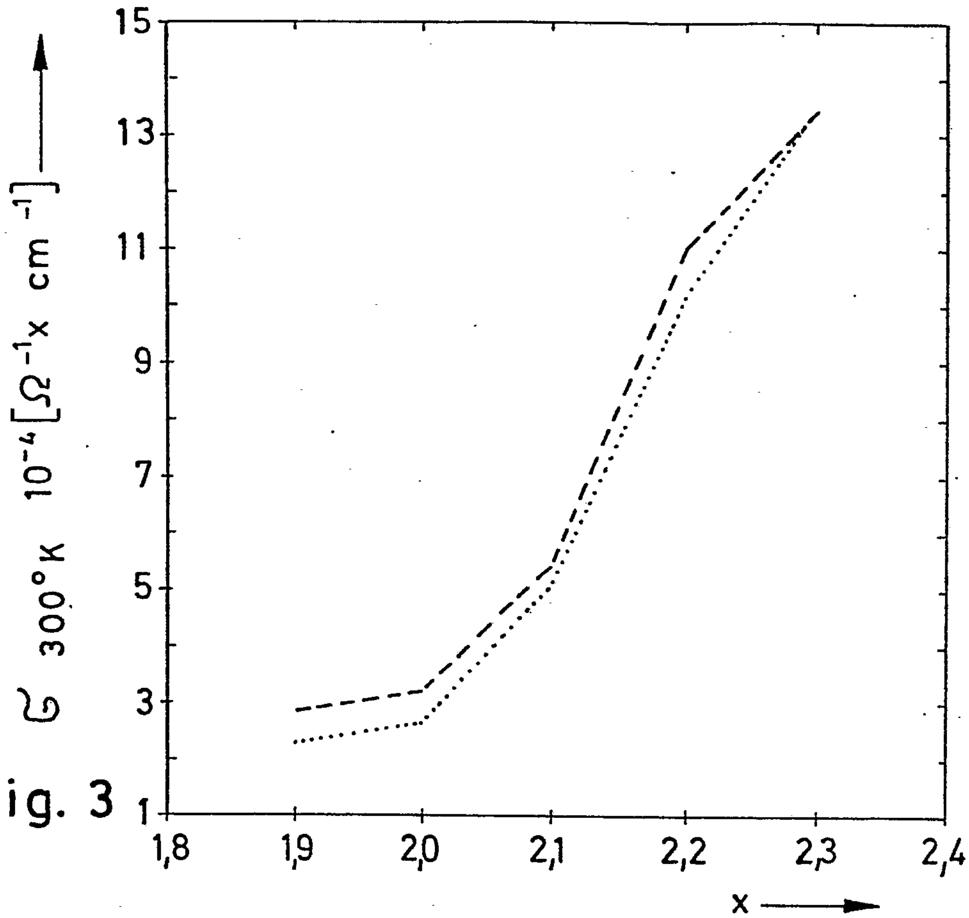

15
13
11
9
7
5
3
1
1,8
1,9
2,0
2,1
2,2
2,3
2,4
x
σ 300°K 10⁻⁴ [Ω⁻¹x cm⁻¹]


Fig. 3

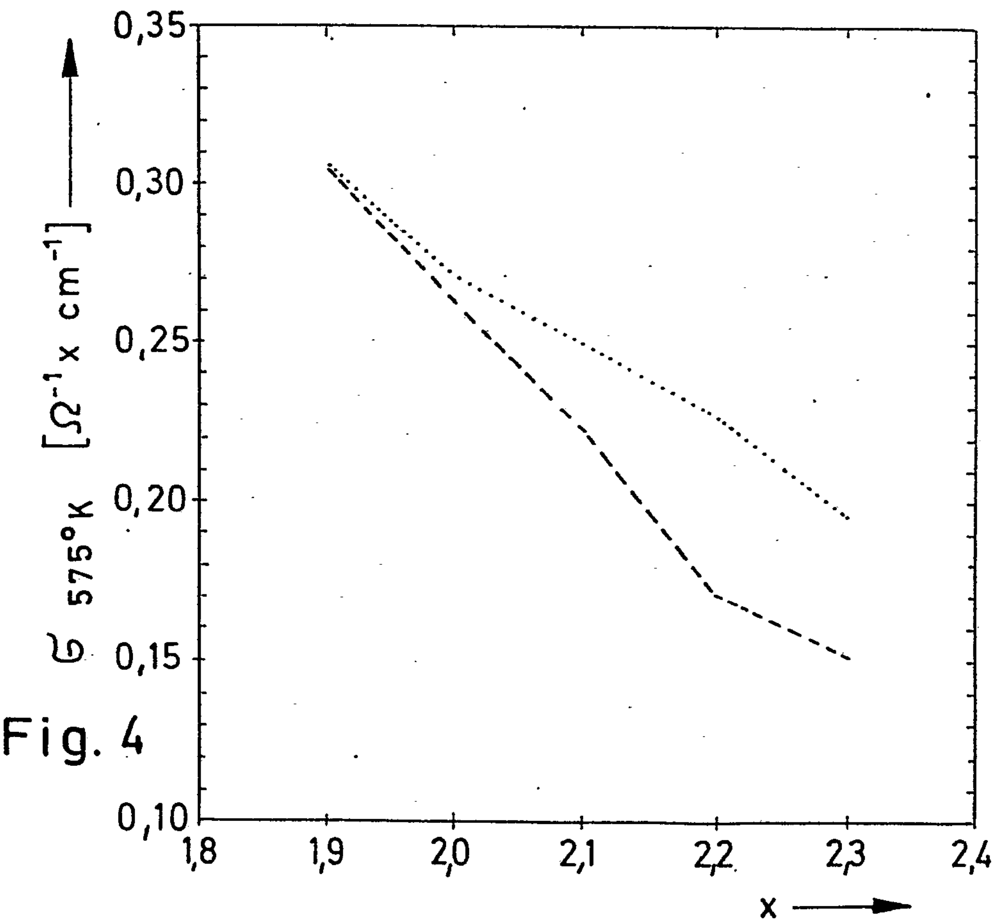

0,35
0,30
0,25
0,20
0,15
0,10
1,8
1,9
2,0
2,1
2,2
2,3
2,4
x
σ 575°K [Ω⁻¹x cm⁻¹]


Fig. 4